# EUROPÄISCHE PATENTSCHRIFT

(11) **EP 0 763 679 B1**
(45) Veröffentlichungstag und Bekanntmachung des Hinweises auf die Patenterteilung: **23.05.2001**
(21) Anmeldenummer: 96112819.6
(22) Anmeldetag: 08.08.1996
(51) Int. Cl.: F16H 61/46

(54) **Steuereinrichtung mit Temperaturkompensation**
Control system with temperature compensation
Système de commande à compensation de température

(30) Priorität: 13.09.1995 DE 19533967
(43) Veröffentlichungstag der Anmeldung: 19.03.1997
(73) Patentinhaber: BRUENINGHAUS HYDROMATIK GMBH, 89275 Elchingen (DE)
(72) Erfinder: Appel, Wilhelm, 89079 Ulm (DE)
(74) Vertreter: Körber, Wolfhart, Dr. rer.nat.

(56) Entgegenhaltungen:
- EP-A- 0 433 770
- DE-A- 2 701 302
- DE-A- 3 131 866
- DE-A- 3 633 836
- US-A- 3 908 377
- WILHELM GÖLLNER, LOTHAR MÜNZE: "Hydraulische Fahrautomatik als Baustein eines modularen Reglerkonzeptes hydrostatischer Getriebe" O+P "ÖLHYDRAULIK UND PNEUMATIK", Bd. 33, Nr. 4, 1989, Seiten 275-282, XP002055108

## Beschreibung

Die Erfindung betrifft eine Steuereinrichtung für ein hydrostatisches Getriebe nach dem Oberbegriff des Anspruches 1 bzw. des Anspruches 5. Die Steuereinrichtung dient dem Zweck, das Verstellen der Hydropumpe und/oder/ des Hydromotors des hydrostatischen Getriebes der Getriebeeingangsdrehzahl, insbesondere der Drehzahl des mit dem Getriebeeingang verbundenen Antriebsmotors, anzupassen.

Eine Steuereinrichtung nach dem Oberbegriff des Anspruches 1 ist aus der US-A-3 908 377 bekannt. Bei der bekannten Steuereinrichtung wird eine Hilfspumpe synchron zur Getriebeeingangsdrehzahl angetrieben und der Förderstrom der Hilfspumpe wird als Regelgröße zum Ausschwenken der Hydropumpe und/oder des Hydromotors des hydrostatischen Getriebes herangezogen. Zu diesem Zweck ist der Hilfspumpe ein Abzweigventil nachgeschaltet, das eine Abzweigleitung mit einem dem Förderstrom der Hilfspumpe proportionalen Stelldruck beaufschlagt, welcher zum Verstellen der Hydropumpe und/oder/des Hydromotors genutzt wird. Zum Erzeugen des Stelldrucks weist das Abzweigventil eine Steuer-Drosselblende auf, die in einem entgegen einer Rückstellkraft beweglichen Ventilkörper vorgesehen ist. Der Ventilkörper gibt infolge seiner Verschiebung einen mit der Abzweigleitung verbundenen Ausgang frei. Der sich in der Abzweigleitung einstellende Stelldruck ist daher dem Druckabfall an der Steuer-Drosselblende proportional, der seinerseits von dem Förderstrom der Hilfspumpe und vom Öffnungsquerschnitt der Steuer-Drosselblende sowie von der Viskosität des durch die Steuer-Drosselblende strömenden Druckmediums abhängt.

Da jedoch die Viskosität des Druckmediums mit zunehmender Temperatur abnimmt, sinkt der Druckabfall an der Steuer-Drosselblende, wenn während des Betriebs der Steuereinrichtung die Temperatur des Druckmediums ansteigt. Damit sinkt jedoch auch der Stelldruck in der zu der Verstellvorrichtung der Hydropumpe und/oder/des Hydromotors führenden Abzweigleitung, was insgesamt zur Folge hat, daß die Aussteuerung des hydrostatischen Getriebes temperaturabhängig ist. Dies stellt einen erheblichen Nachteil der bekannten Steuereinrichtung dar.

Aus der EP 0 433 770 A2 ist ein Steuerungsventil für einen hydraulischen Fahrstuhl bekannt, welches einen Zapfen zur Geschwindigkeitsregulierung aufweist, welcher sich durch den Fluß des Hydraulikfluids bewegt, wobei die Position des Zapfens zur Geschwindigkeitsregulierung den Fluß des Hydraulikfluids bestimmt, welcher in den Antriebszylinder des Fahrstuhls fließt, und ein hydraulisches Rohrsystem, welches eine im wesentlichen geschlossene Schleife bildet. Wenn sich der Fahrstuhl einer Haltestation nähert, tritt insbesondere die Schwierigkeiten auf, eine konstante Abbremsung des Fahrstuhls ungeachtet von Änderungen der Temperatur des Hydraulikfluids zu erreichen. Das vorgeschlagene Steuerungsventil löst dieses Problem dadurch, daß das hydraulische Rohrsystem mit einem Flußwiderstandsbauteil ausgerüstet ist, welches an einem Ende des Zapfens zur Geschwindigkeitsregulierung angeordnet ist, wobei die Einstellung des genannten Bauteils durch die Temperatur des Hydraulikfluids verändert wird.

Die obengenannte Druckschrift braucht hier insofern nicht weiter in Betracht gezogen werden, da es sich um eine gattungsfremde Vorrichtung zur Steuerung der Geschwindigkeit eines Fahrstuhls handelt, während die erfindungsgemäße Vorrichtung der Temperaturkompensation beim Betrieb einer Hydropumpe oder eines Hydromotors dient.

Der vorliegenden Erfindung liegt daher die Aufgabe zugrunde, die bekannte Steuereinrichtung so weiterzubilden, daß die Temperaturabhängigkeit der mit der Steuereinrichtung bewirkten Aussteuerung des hydrostatischen Getriebes weitgehend beseitigt oder zumindest verringert ist.

Die Aufgabe wird durch die kennzeichnenden Merkmale des Anspruches 1 oder durch die kennzeichnenden Merkmale des Anspruches 5 jeweils in Verbindung mit den gattungsbildenden Merkmalen gelöst.

Gemäß der Lösung nach Anspruch 1 ist eine Temperaturkompensationseinheit in dem Abzweigventil vorgesehen, die den wirksamen Öffnungsquerschnitt der Steuer-Drosselblende mit zunehmender Temperatur des die Steuer-Drosselblende durchströmenden Druckmediums verringert. Dabei liegt der Erfindung die Erkenntnis zugrunde, daß der Druckabfall an der Steuer-Drosselblende zwar einerseits mit abnehmender Viskosität infolge zunehmender Temperatur des Druckmediums sinkt, jedoch andererseits mit abnehmendem Öffnungsquerschnitt der Steuer-Drosselblende ansteigt. Daher kann durch eine gezielte temperaturabhängige Verringerung des Öffnungsquerschnitts der Steuer-Drosselblende der durch die Verringerung der Viskosität hervorgerufene Effekt weitgehend kompensiert werden, so daß der Druckabfall in'der Steuer-Drosselblende im wesentlichen temperaturunabhängig wird.

Gemäß der'alternativen Lösung nach Anspruch 5 kann eine ähnliche Temperaturkompensation dadurch erreicht werden, daß parallel zum Abzweigventil ein Kompensationsventil vorgesehen ist, das eine Kompensations-Drosselblende aufweist. Wird der Öffnungsquerschnitt der Kompensations-Drosselblende mit zunehmender Temperatur des die Kompensations-Drosselblende durchströmenden Druckmediums verringert, so reduziert sich der durch das Kompensationsventil fließende Volumenstrom. Folglich steigt der Volumenstrom durch das Abzweigventil an. Die Steuer-Drosselblende wird daher mit zunehmender Temperatur von einem zunehmenden Volumenstrom durchflossen, so daß die durch den Temperaturanstieg hervorgerufene Viskositätsverringerung durch die Erhöhung des Volumenstroms weitgehend kompensiert wird. Der Druckabfall an der Steuer-Drosselblende ist daher auch bei dieser Lösung weitgehend temperaturunabhängig.

Die Ansprüche 2 bis 4 und 6 bis 12 beinhalten vorteilhafte Weiterbildungen der Erfindung.

Entsprechend dem Anspruch 6. kann die Temperaturkompensationseinheit aus einem temperaturabhängigen Element, das mit einem Schließ-Element verbunden ist, gebildet sein. Das Schließelement nach Anspruch 2 bzw. 7 kann ein bolzenartiges Element umfassen, dessen Bolzenspitze mit zunehmender Temperatur in die Öffnung der Steuer-Drosselblende bzw. der Kompensations-Drosselblende eindringt. Dadurch wird der wirksame Öffnungsquerschnitt der Steuer-Drosselblende bzw. der Kompensations-Drosselblende temperaturabhängig verengt.

Das temperaturabhängige Element kann einen oder mehrere Dehnkörper aufweisen, die vorteilhaft aus einem gummiartigen Elastomer-Werkstoff, insbesondere wie Viton, hergestellt sein kann. Elastomer-Werkstoffe weisen einen erheblich großeren thermischen Ausdehnungskoeffizienten als z.B. Stahl-Aluminium-Dehnelemente auf, so daß die Baulänge des temperaturabhängigen Elements relativ gering gehalten werden kann.

Bei der Lösung nach Anspruch 1 kann das temperaturabhängige Element und das Schließelement, insbesondere aufgrund der geringen baulichen Ausdehnung bei Verwendung eines Elastomer-Werkstoffs, in den als Hohlkolben ausgebildeten Ventil körper nach Anspruch 4 integriert werden.

Eine Variation der Vorspannung der die Rückstellkraft für den Ventilkörper bewirkenden Feder gemäß den Ansprüchen 10 und 11 ermöglicht eine genaue Justage des Abzweigventils.

Im folgenden werden bevorzugte Ausführungsbeispiele der Erfindung anhand der Zeichnung näher beschrieben. Darin zeigen:
- Fig. 1: einen axialen Schnitt durch ein Ausführungsbeispiel des erfindungsgemäß weitergebildeten Abzweigventils,
- Fig. 2: eine vergrößerte Darstellung des Abzweigventils im Bereich der Steuer-Drosselblende entsprechend dem Ausführungsbeispiel nach Fig. 1,
- Fig. 3: eine Gesamtdarstellung der erfindungsgemäßen Steuereinrichtung unter Verwendung eines Abzweigventils gemäß dem Ausführungsbeispiel nach Fig. 1 und 2,
- Fig. 4: einen Schnitt durch ein alternatives Ausführungsbeispiel der erfindungsgemäßen Steuereinrichtung.

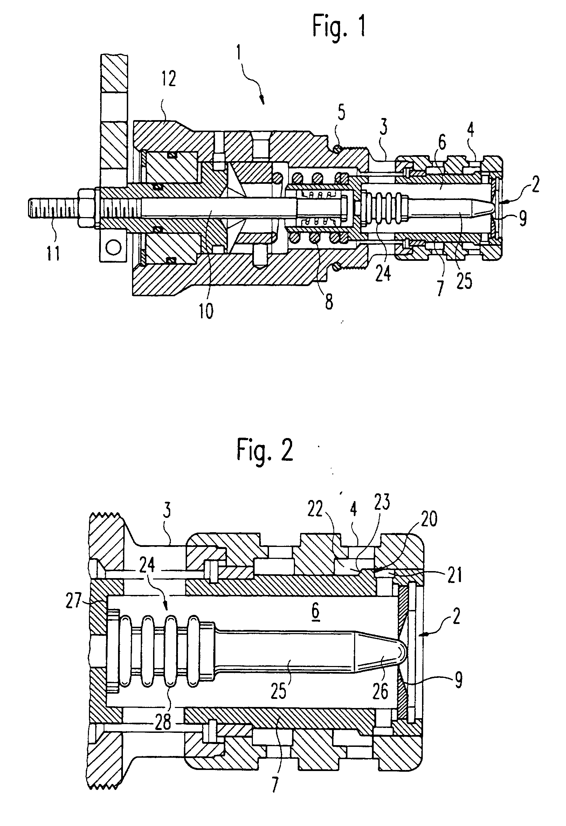

Figur 1 zeigt einen Schnitt durch ein Ausführungsbeispiel eines erfindungsgemäß weitergebildeten Abzweigventils, das zum Einsatz in der erfindungsgemäßen Steuereinrichtung vorgesehen ist.

Das Abzweigventil 1 weist einen Eingang 2, einen ersten Ausgang 3 und einen zweiten Ausgang 4 auf. Das Abzweigventil ist patronenförmig ausgebildet und ragt bis zu einer als 0-Ring ausgebildeten Abdichtung 5 in ein in Figur 1 nicht dargestelltes Gegenstück, das die Anschlußleitungen aufnimmt. Zwischen dem Eingangsanschluß 2 und dem ersten Ausgangsanschluß 3 ist ein zylinderförmiger Strömungskanal 6 ausgebildet, in welchem ein Ventilkörper 7 gegen eine von der Rückstellfeder 8 ausgeübte Rückstellkraft verschiebbar gelagert ist. Ferner weist der Ventilkörper 7 an seiner dem Eingang 2 zugewandten Stirnseite eine Steuer-Drosselblende 9 auf. Die Vorspannung der Rückstellfeder 8 kann mittels eines Stellzapfens 10, der endseitig als Gewindestange 11 ausgebildet ist, eingestellt werden. Der Stellzapfen 10 wird zur Justage der Vorspannung der Druckfeder 8 in das Ventilgehäuse 12 so weit eingeschraubt, bis die erforderliche Rückstellkraft für den Ventilkörper 7 erreicht ist.

Die Funktionsweise des in Figur 1 dargestellten Abzweigventils wird nunmehr anhand der vergrößerten Darstellung der Fig. 2 näher beschrieben.

Das durch den Eingang 2 anströmende Druckmedium durchströmt den Strömungskanal 6 und tritt am ersten Ausgang 3 aus dem Abzweigventil 1 aus. Das Druckmedium durchströmt dabei auch die Steuer-Drosselblende 9, an der sich eine Druckdifferenz einstellt, die von dem durch die Steuer-Drosselblende 9 strömenden Volumenstrom abhängig ist. Die Druckdifferenz an der Steuer-Drosselblende bewirkt ein Verschieben des Ventilkörpers 7 in Strömungsrichtung des den Strömungskanal 6 durchströmenden Druckmediums.

Durch die Verschiebung des Ventilkörpers 7 bewegt sich die Steuerkante 20 der mit dem Strömungskanal 6 verbundenen ringförmigen Ausnehmung 21 in dem Ventilkörper 7 in Richtung auf eine mit einem zweiten Ausgang 4 verbundene Druckkammer 22. Der sich in der an den zweiten Ausgang 4 angeschlossenen, in Figur 2 nicht dargestellten Abzweigleitung aufbauende Stelldruck wirkt über die Differenzfläche 23 in schließende Richtung. Auf diese Weise ist der Stelldruck in der an den zweiten Ausgang 4 angeschlossenen Abzweigleitung abhängig von der Druckdifferenz an der Steuer-Drosselblende 9 und somit von dem das Abzweigventil 1 zwischen dem Eingang 2 und dem ersten Ausgang 3 durchströmenden Volumenstrom.

Die Druckdifferenz an der Steuer-Drosselblende 9 ist jedoch abhängig von der Viskosität und somit von der Temperatur des diese durchströmenden Druckmediums. Da sich die Temperatur im Laufe des Betriebs der Steuereinrichtung verändert, führt dies zu einer nicht beabsichtigten, höchst nachteiligen Temperaturabhängigkeit der Steuerkennlinie. Dieser Temperaturabhängigkeit wirkt die im folgenden zu beschreibende erfindungsgemäße Weiterbildung entgegen.

Erfindungsgemäß ist in dem Ventilkörper 7 eine aus einem temperaturabhängigen Element 24 und einem Schließelement 25 bestehende Temperaturkompensationseinheit 24, 25 vorgesehen. Im vorliegenden Ausführungsbeispiel ist diese Temperaturkompensationseinheit 24, 25 in dem als Hohlkolben ausgebildeten Ventilkörper 7 integriert. Jedoch ist eine Vielzahl alternativer Ausführungen denkbar. Die Integration in den Ventilkörper 7 stellt jedoch eine platzsparende Lösung dar und hat zudem den Vorteil, daß das temperaturabhängige Element 24 fortwährend von dem Druckmedium umströmt wird, was einen schnellen Temperaturausgleich bewirkt.

Im in Fig. 2 dargestellten Ausführungsbeispiel stützt sich das temperaturabhängige Element 24 an der der Steuer-Drosselblende 9 gegenüberliegenden Stirnseite 27 des Ventilkörpers 7 ab. Das temperaturabhängige Element 24 weist eine temperaturabhängige Längenausdehnung mit im Ausführungsbeispiel positiven thermischen Ausdehnungskoeffizienten auf. Dazu kann das temperaturabhängige Element 24 einen oder mehrere Dehnkörper umfassen, die aus einem Material mit großem thermischen Ausdehnungskoeffizienten, vorzugsweise aus einem gummielastischen Elastomer-Werkstoff, z.B. Viton, besteht. Mittels Elastomer-Werkstoffen lassen sich thermische Ausdehnungskoeffizienten von 13 10⁻⁵/K und größer erreichen. Die bauliche Ausdehnung des temperaturabhängigen Elements 24 kann daher so gering sein, daß eine Integration in den Ventilkörper 7 ermöglicht wird. Zur Verbesserung der Wärmekopplung zwischen dem temperaturabhängigen Element 24 und dem dieses umströmenden Druckmedium kann das temperaturabhängige Element 24 zur Vergrößerung der Oberfläche Rippenelemente 28 aufweisen. An das temperaturabhängige Element 24 schließt sich das bolzenartig ausgebildete Schließelement 25 an, das an dem der Steuer-Drosselblende 9 zugewandten Ende eine konisch ausgebildete Bolzenspitze 26 aufweist. Mit zunehmender Temperatur des die Temperaturkompensationseinheit 24, 25 umströmenden Druckmediums dehnt sich das temperaturabhängige Element 24 aus und verschiebt das bolzenartige Element 25 in Richtung auf die Steuer-Drosselblende 9. Dadurch dringt die konisch ausgebildete Bolzenspitze 26 zunehmend in die Öffnung der Steuer-Drosselblende 9 ein und verringert somit deren wirksamen Öffnungsquerschnitt.

Die temperaturabhängige Verringerung des wirksamen Querschnitts der Steuer-Drosselblende 9 wirkt der temperaturabhängigen Viskosität des Druckmediums in der Weise entgegen, daß die Druckdifferenz an der Steuer-Drosselblende im wesentlichen temperaturunabhängig ist, da die Druckdifferenz einerseits mit Verringerung der Viskosität abnimmt, jedoch andererseits mit der Verringerung des wirksamen Öffnungsquerschnitts der Steuer-Drosselblende 9 ansteigt. Somit wird die Steuer-Kennlinie der erfindungsgemäßen Steuereinrichtung im wesentlichen temperaturunabhängig.

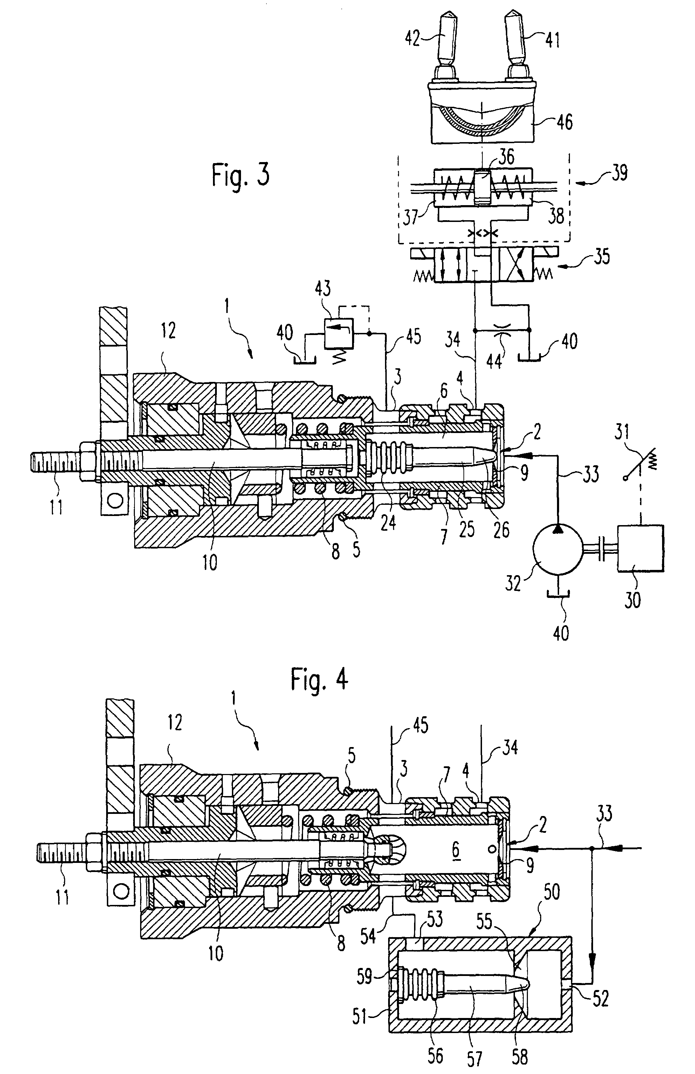

Zum besseren Verständnis ist in Figur 3 die hydraulische Schaltung der gesamten Steuereinrichtung wiedergegeben. Die anhand der Figuren 1 und 2 bereits erläuterten Komponenten des Abzweigventils 1 sind mit den gleichen Bezugszeichen versehen, so daß auf eine diesbezügliche Beschreibung nachfolgend verzichtet werden kann. Ein Verbrennungsmotor 30, dessen Drehzahl mittels eines Gaspedals 31 veränderbar ist, treibt neben der nicht vollständig dargestellten Hydropumpe des hydrostatischen Getriebes auch eine Hilfspumpe 32 an. Die Drehzahl der Hilfspumpe 32 ist dabei synchron zur Drehzahl der Hydropumpe des hydrostatischen Getriebes. Somit ist der Förderstrom in der Verbindungsleitung 33 proportional zur Drehzahl des Verbrennungsmotors 30. Mittels des Abzweigventils 1 wird die Abzweigleitung 34 mit einem Stelldruck beaufschlagt, der dem Förderstrom in der Verbindungsleitung 33 und somit der Drehzahl des Verbrennungsmotors 30 proportional ist. Bezüglich der Funktionsweise des Abzweigventils und der Temperaturkompensation wird auf vorstehende Ausführungen verwiesen.

Die Abzweigleitung 34 ist über ein Fahrtrichtungsventil 35 mit den Druckkammern 37 und 38 der Verstellvorrichtung 39 verbunden. Je nach Fahrtrichtung wird entweder die Druckkammer 37 oder die Druckkammer 38 mit dem Stelldruck der Abzweigleitung 34 beaufschlagt, während die jeweils andere Druckkamer zum Druckmitteltank 40 hin belüftet wird. Der Stellkolben 36 ist mit der Schwenkwiege 46 der Hydropumpe des hydrostatischen Getriebes formschlüssig verbunden und legt damit das Fördervolumen der Hydropumpe in Abhängigkeit von der Größe des Stelldrucks in der Abzweigleitung 34 fest. Zur Veranschaulichung sind in Figur 3 die Kolben 41 und 42 der ansonsten nicht wiedergegebenen Hydropumpe dargestellt.

Der erste Ausgang 3 des Abzweigventils 1 ist dagegen über die Abflußleitung 45 und ein Überdruckventil 43 mit dem Druckmitteltank 40 verbunden.

Um einen Druckausgleich beim Absinken des vom Abzweigventil 1 vorgegebenen Stelldrucks in der Abzweigleitung 34 zu ermöglichen, steht diese mittels einer Drossel 44 ebenfalls mit dem Druckmitteltank 40 in Verbindung.

Da einerseits das Fördervolumen in der Verbindungsleitung 33 zur Drehzahl des Verbrennungsmotors 30 proportional ist und andererseits das Abzweigventil 1 die Abzweigleitung 34 mit einem von diesem Fördervolumen abhängigen Stelldruck beaufschlagt, stellt sich insgesamt der Schwenkwinkel der Hydropumpe des hydrostatischen Getriebes in Abhängigkeit von der Drehzahl des Verbrennungsmotors 30 ein. Durch die erfindungsgemäße Temperaturkompensation wird erreicht, daß der Schwenkwinkel der Hydropumpe weitgehend von der Betriebstemperatur des Druckmediums unabhängig ist.

Figur 4 zeigt ein alternatives Ausführungsbeispiel der erfindungsgemäßen Steuereinrichtung.

In Figur 4 ist lediglich ein Ausschnitt aus der erfindungsgemäßen Steuereinrichtung bestehend aus dem Abzweigventil 1 und einem noch zu beschreibenden Kompensationsventil 50 dargestellt; die Hilfspumpe 32 und die hydraulische Beschaltung der Verstelleinrichtung 39 wurden aus Gründen der Übersichtlichkeit weggelassen. Die Anordnung ist insoweit identisch mit dem Ausführungsbeispiel nach Figur 3.

Im Gegensatz zu den Ausführungsbeispielen nach den Figuren 1 bis 3 ist die Temperaturkompensationseinheit nicht in dem Abzweigventil 1 integriert, sondern in einem zusätzlichen Kompensationsventil 50 vorgesehen. Das Kompensationsventil 50 weist in einem Gehäuse 51 einen Eingang 52, der mit der Verbindungsleitung 33 zu der Hilfspumpe 32 verbunden ist, und einen Ausgang 53, der über eine Verbindungsleitung 54 mit der Abflußleitung 45 in Verbindung steht, auf. Das Kompensationsventil ist daher zwischen dem Eingang 2 und dem ersten Ausgang 3 parallel zum Abzweigventil 1 geschaltet. In dem Kompensationsventil 50 ist eine Kompensations-Drosselblende 55 vorgesehen, durch welche das vom Eingang 52 zum Ausgang 53 fließende Druckmedium hindurchströmt. Die Querschnittsfläche der Kompensations-Drosselblende 55 ist ähnlich wie die Steuer-Drosselblende im Ausführungsbeispiel nach den Figuren 1 bis 3 mittels einer Temperaturkompensationseinheit temperaturabhängig ausgebildet.

Die Temperaturkompensationseinheit besteht im dargestellten Ausführungsbeispiel aus einem temperaturabhängigen Element 56 und einem bolzenartigen Schließelement 57, das an seinem der Kompensations-Drosselblende 55 zugewandten Ende eine konusförmig ausgebildete Bolzenspitze 58 aufweist. Die Temperaturkompensationseinheit ist daher im in Figur 4 dargestellten Ausführungsbeispiel baugleich zur Kompensationseinheit 24, 25 in den Figuren 1 bis 3, so daß hinsichtlich der detaillierteren Beschreibung auf die obigen Ausführungen verwiesen werden kann. Das temperaturabhängige Element 56, das vorzugsweise aus einem Elastomer-Werkzeug gebildete Dehnkörper aufweist, stützt sich im dargestellten Ausführungsbeispiel an der der Kompensations-Drosselblende 55 gegenüberliegenden Stirnflächen 59 des Gehäuses 51 ab. Mit zunehmender Temperatur wird das bolzenartig ausgebildete Element 57 in Richtung auf die Kompensations-Drosselblende 55 verschoben, so daß die Bolzenspitze 58 in die Öffnung der Kompensations-Drosselblende eindringt. Somit verengt sich der wirksame Öffnungsquerschnitt der Kompensations-Drosselblende mit zunehmender Temperatur des die Temperaturkompensationseinheit umströmenden Druckmediums.

Die Verengung der Kompensations-Drosselblende 55 bewirkt einen verminderten Druckmittelfluß durch den durch das Kompensationsventil 50 führenden Hydraulikzweig, so daß bei vorgegebener Fördermenge der Hilfspumpe 32 vermehrt Druckmittel durch das Abzweigventil 1 fließt. Dieser mit der Betriebstemperatur ansteigende Druckmittelfluß durch das Abzweigventil 1 kompensiert den verminderten Druckabfall an der Steuer-Drosselblende 9 aufgrund der sinkenden Viskosität des Druckmittels mit der zunehmenden Temperatur. Bei geeigneter Dimensionierung des Öffnungsquerschnitts der Kompensations-Drosselblende 55 und der thermischen Längenausdehnung des temperaturabhängigen Elements 56 kann daher eine weitgehende Kompensation der Temperaturabhängigkeit erreicht werden.

Es ist offensichtlich, daß die vorbeschriebenen Ausführungsbeispiele im Rahmen der Erfindung in vielfältiger Weise variiert werden können. So können für das temperaturabhängige Element 24 diverse thermische Dehnkörper bekannter Materialien zum Einsatz kommen und das Schließelement 25 kann in vielfältiger Weise konkret ausgestaltet sein, wobei es lediglich auf eine temperaturabhängige Verengung bzw. Aufweitung des effektiven Öffnungsquerschnitts der jeweiligen Drosselblende ankommt.

## Patentansprüche

1. Steuereinrichtung für ein hydrostatisches Getriebe mit einer synchron zur Getriebeeingangsdrehzahl angetriebenen Hilfspumpe (32) und einem der Hilfspumpe (32) nachgeschalteten Abzweigventil (1), das einen Teil des von der Hilfspumpe (32) geförderten Förderstroms in eine Abzweigleitung (34) zur Verstellung der Hydropumpe und/oder des Hydromotors des hydrostatischen Getriebes abzweigt,
wobei das Abzweigventil (1) einen entgegen eine Rückstellkraft beweglichen als Hohlkolben ausgebildeten Ventilkörper (7) mit einer zwischen einem mit der Hilfspumpe (32) verbundenen Eingang (2) und einem ersten Ausgang (3) angeordneten Steuer-Drosselblende (9) aufweist und der Ventilkörper (7) mit zunehmender Verschiebung gegen die Rückstellkraft einen mit der Abzweigleitung (34) verbundenen zweiten Ausgang (4) freigibt,
**dadurch gekennzeichnet,**
daß der Ventilkörper (7) eine Temperaturkompensationseinheit (24, 25) enthält, welche ein temperaturabhängiges Element (24) und ein mit diesem verbundenes Schließelement (25) aufweist, welches mit zunehmender Temperatur des temperaturabhängigen Elements (24) den Öffnungsquerschnitt der Steuer-Drosselblende (9) verengt, und daß die Temperaturkompensationseinheit (24, 25) in den Hohlraum des Ventilkörpers (7) integriert ist und sich das temperaturabhängige Element (24) an der der Steuer-Drosselblende (9) gegenüberliegenden Stirnfläche (26) des Ventilkörpers (7) abstützt.

2. Steuervorrichtung nach Anspruch 1,
**dadurch gekennzeichnet,**
daß das Schließelement ein bolzenartiges Element (25) umfaßt, dessen konische Bolzenspitze (26) mit zunehmender Temperatur des temperaturabhängigen Elements (24) in die Öffnung der Steuer-Drosselblende (9) eindringt.

3. Steuereinrichtung nach Anspruch 1 oder 2,
**dadurch gekennzeichnet,**
daß das temperaturabhängige Element (24) zumindest einen Dehnkörper aus einem Material mit großem thermischen Ausdehnungskoeffizienten umfaßt.

4. Steuereinrichtung nach Anspruch 3,
**dadurch gekennzeichnet,**
daß der Dehnkörper zumindest teilweise aus einem Elastomer-Werkstoff, insbesondere Viton, besteht.

5. Steuereinrichtung für ein hydrostatisches Getriebe mit einer synchron zur Getriebeeingangsdrehzahl getriebenen Hilfspumpe (32) und einem der Hilfspumpe (32) nachgeschalteten Abzweigventil (1), das einen Teil des von der Hilfspumpe (32) geförderten Förderstroms in eine Abzweigleitung (34) zur Verstellung der Hydropumpe und/oder des Hydromotors des hydrostatischen Getriebes abzweigt, wobei das Abzweigventil (1) einen entgegen einer Rückstellkraft beweglichen Ventilkörper (7) mit einer zwischen einem mit der Hilfspumpe (32) verbundenen Eingang (2) und einem ersten Ausgang (3) angeordnete Steuer-Drosselblende (9) aufweist und der Ventilkörper (7) mit zunehmender Verschiebung gegen die Rückstellkraft einen mit der Abzweigleitung (34) verbundenen zweiten Ausgang (4) freigibt,
**gekennzeichnet durch**
ein parallel zum Abzweigventil (1) angeordnetes Kompensationsventil (50) mit
einem mit dem Eingang (2) des Abzweigventils (1) verbundenen Eingang (52) und einem mit dem ersten Ausgang (3) des Abzweigventils (1) verbundenen Ausgang (53), einer zwischen dem Eingang (52) und dem Ausgang (53) des Kompensationsventils (50) angeordneten Kompensations-Drosselblende (55) und einer Temperaturkompensationseinheit (56, 57), die den wirksamen Öffnungsquerschnitt der Kompensations-Drosselblende (55) mit zunehmender Temperatur des die Kompensations-Drosselblende (55) durchströmenden Druckmediums verringert.

6. Steuereinheit nach Anspruch 5,
**dadurch gekennzeichnet,**
daß die Temperaturkompensationseinheit (56, 57) ein temperaturabhängiges Element (56) und ein mit diesem verbundenes Schließ-Element (57), das mit zunehmender Temperatur des temperaturabhängigen Elements (56) den Öffnungsquerschnitt der Kompensations-Drosselblende (55) verengt, aufweist.

7. Steuereinrichtung nach Anspruch 6,
**dadurch gekennzeichnet,**
daß das Schließ-Element ein bolzenartiges Element (57) umfaßt, dessen konische Bolzenspitze (58) mit zunehmender Temperatur des temperaturabhängigen Elements (56) in die Öffnung der Kompensations-Drosselblende (55) eindringt.

8. Steuereinrichtung nach Anspruch 6 oder 7,
**dadurch gekennzeichnet,**
daß das temperaturabhängige Element (56) einen Dehnkörper aus einem Material mit großem thermischen Ausdehnungskoeffizienten umfaßt.

9. Steuereinrichtung nach Anspruch 8,
**dadurch gekennzeichnet,**
daß der Dehnkörper zumindest teilweise aus einem Elastomer-Werkstoff, insbesondere Viton, besteht.

10. Steuereinrichtung nach einem der Ansprüche 1 bis 9,
**dadurch gekennzeichnet,**
daß die auf den Ventilkörper (7) einwirkende Rückstellkraft durch eine vorspannbare Feder (8) bewirkt wird.

11. Steuereinrichtung nach Anspruch 10,
**dadurch gekennzeichnet,**
daß die Vorspannung der Feder (8) justierbar ist.

12. Steuereinrichtung nach einem der Ansprüche 1 bis 11,
**dadurch gekennzeichnet,**
daß der Ventilkörper (7) in der Nähe der Steuer-Drosselblende (9) eine Steuerkante (20) aufweist, die in Abhängigkeit von der Verschiebung des Ventilkörpers (7) den Öffnungsquerschnitt des zweiten Ausgangs (4) freigibt.

## Claims

1. Control device for a hydrostatic gearbox with an auxiliary pump (32) driven in synchronism with the input speed of the gearbox, and a diverter valve (1) connected downstream of the auxiliary pump (32), which diverts a portion of the flow delivered by the auxiliary pump (32) into a branch circuit (34) for the adjustment of the hydraulic pump and/or the hydraulic motor of the hydrostatic gearbox, wherein the diverter valve (1) has a valve body (7) constructed as a hollow piston and movable against a restoring force, with a control orifice plate (9) arranged between an inlet (2) connected to the auxiliary pump (32) and a first outlet (3), and with increasing displacement against the restoring force the valve body (7) unblocks a second outlet (4) connected to the branch circuit (34), **characterised in that**
the valve body (7) contains a temperature compensation unit (24, 25) which has a temperature-dependent element (24) and a closing element (25) connected to said temperature-dependent element, which closing element reduces the cross-section of the opening of the control orifice plate (9) with increasing temperature of the temperature-dependent element (24), and that the temperature compensation unit (24, 25) is integrated in the hollow space of the valve body (7) and the temperature-dependent element (24) is supported at the end face (26) of the valve body (7) that is opposite the control orifice plate (9).

2. Control device according to Claim 1,
**characterised in that**
the closing element comprises a bolt-like element (25) whose conical bolt tip (26) penetrates the opening of the control orifice plate (9) with increasing temperature of the temperature-dependent element (24).

3. Control device according to Claim 1 or 2,
**characterised in that**
the temperature-dependent element (24) comprises at least one expanding body made from a material having a large coefficient of thermal expansion.

4. Control device according to Claim 3,
**characterised in that**
the expanding body consists, at least partially, of an elastomer material, in particular Viton.

5. Control device for a hydrostatic gearbox with an auxiliary pump (32) driven in synchronism with the input speed of the gearbox, and a diverter valve (1) connected downstream of the auxiliary pump (32), which diverts a portion of the flow delivered by the auxiliary pump (32) into a branch circuit (34) for the adjustment of the hydraulic pump and/or the hydraulic motor of the hydrostatic gearbox, wherein the diverter valve (1) has a valve body (7) movable against a restoring force, with a control orifice plate (9) arranged between an inlet (2) connected to the auxiliary pump (32) and a first outlet (3), and with increasing displacement against the restoring force the valve body (7) unblocks a second outlet (4) connected to the branch circuit (34),
**characterised by**
a compensation valve (50) arranged parallel to the diverter valve (1), with an inlet (52) connected to the input (2) of the diverter valve (1) and an outlet (53) connected to the first outlet (3) of the diverter valve (1), a compensation orifice plate (55) arranged between the inlet (52) and the outlet (53) of the compensation valve (55), and a temperature compensation unit (56, 57), which reduces the effective cross-section of the opening of the compensation orifice plate (55) with increasing temperature of the pressure medium flowing through the compensation orifice plate (55).

6. Control device according to Claim 5,
**characterised in that**
the temperature compensation unit (56, 57) has a temperature-dependent element (56) and a closing element (57) connected to this temperature-dependent element, that with increasing temperature of the temperature-dependent element (56) reduces the cross-section of the opening of the compensation orifice plate (55).

7. Control device according to Claim 6,
**characterised in that**
the closing element comprises a bolt-like element (57) whose conical bolt tip (58) penetrates the opening of the compensation orifice plate (55) with increasing temperature of the temperature-dependent element (56).

8. Control device according to Claim 6 or 7,
**characterised in that**
the temperature-dependent element (56) comprises an expanding body made from a material having a large coefficient of thermal expansion.

9. Control device according to Claim 8,
**characterised in that**
the expanding body consists, at least partially, of an elastomer material, in particular Viton.

10. Control device according to one of Claims 1 to 9,
**characterised in that**
the restoring force acting on the valve body (7) is provided by a pre-loadable spring (8).

11. Control device according to Claim 10,
**characterised in that**
the pre-loading of the spring (8) is adjustable.

12. Control device according to one of Claims 1 to 11,
**characterised in that**
in the vicinity of the control orifice plate (9) the valve body (7) has a metering ramp (20) that unblocks the cross-section of the opening of the second outlet (4) in relation to the displacement of the valve body (7).

## Revendications

1. Dispositif de commande pour une transmission hydrostatique, comprenant une pompe auxiliaire (32) entraînée en synchronisme avec la vitesse angulaire d'entrée de la transmission, et une soupape de dérivation (1) qui est installée en aval de la pompe auxiliaire (32) et qui détourne, vers un conduit de dérivation (34), une partie du flux d'alimentation refoulé par la pompe auxiliaire (32), en vue du réglage de la pompe hydraulique et/ou du moteur hydraulique de la transmission hydrostatique, la soupape de dérivation (1) présentant un corps obturateur (7) réalisé sous la forme d'un piston creux, mobile en s'opposant à une force de rappel, et muni d'un diaphragme (9) d'étranglement de commande, interposé entre une première sortie (3) et une entrée (2) raccordée à la pompe auxiliaire (32), et ledit corps obturateur (7) dégageant, au fur et à mesure de l'accroissement du déplacement s'opposant à la force de rappel, une seconde sortie (4) raccordée au conduit de dérivation (34),
caractérisé par le fait
que le corps obturateur (7) renferme une unité (24, 25) de compensation de température, comportant un élément thermovariable (24) et un élément de fermeture (25) qui est relié à ce dernier et qui, au fur et à mesure de l'accroissement de température dudit élément thermovariable (24), rétrécit la section transversale d'ouverture du diaphragme (9) d'étranglement de commande ; et
par le fait que l'unité (24, 25) de compensation de température est intégrée dans la cavité du corps obturateur (7), et l'élément thermovariable (24) prend appui contre la face extrême (26) dudit corps obturateur (7), située en vis-à-vis du diaphragme (9) d'étranglement de commande.

2. Dispositif de commande selon la revendication 1,
caractérisé par le fait
que l'élément de fermeture comprend un élément (25) du type cheville, dont la pointe conique (26) pénètre dans l'ouverture du diaphragme (9) d'étranglement de commande au fur et à mesure de l'accroissement de température de l'élément thermovariable (24).

3. Dispositif de commande selon la revendication 1 ou 2,
caractérisé par le fait
que l'élément thermovariable (24) comprend au moins un corps expansible en un matériau doué d'un coefficient de dilatation thermique élevé.

4. Dispositif de commande selon la revendication 3,
caractérisé par le fait
que le corps expansible consiste au moins partiellement en un élastomère, en particulier du Viton.

5. Dispositif de commande pour une transmission hydrostatique, comprenant une pompe auxiliaire (32) entraînée en synchronisme avec la vitesse angulaire d'entrée de la transmission, et une soupape de dérivation (1) qui est installée en aval de la pompe auxiliaire (32) et qui détourne, vers un conduit de dérivation (34), une partie du flux d'alimentation refoulé par la pompe auxiliaire (32), en vue du réglage de la pompe hydraulique et/ou du moteur hydraulique de la transmission hydrostatique, la soupape de dérivation (1) présentant un corps obturateur (7) mobile en s'opposant à une force de rappel, et muni d'un diaphragme (9) d'étranglement de commande, interposé entre une première sortie (3) et une entrée (2) raccordée à la pompe auxiliaire (32), et ledit corps obturateur (7) dégageant, au fur et à mesure de l'accroissement du déplacement s'opposant à la force de rappel, une seconde sortie (4) raccordée au conduit de dérivation (34),
caractérisé par
une soupape de compensation (50) agencée parallèlement à la soupape de dérivation (1) et comprenant une entrée (52) raccordée à l'entrée (2) de ladite soupape de dérivation (1), et une sortie (53) raccordée à la première sortie (3) de ladite soupape de dérivation (1) ; un diaphragme (55) d'étranglement de compensation, interposé entre l'entrée (52) et la sortie (53) de la soupape de compensation (50) ; et une unité (56, 57) de compensation de température, qui réduit la section transversale d'ouverture efficace dudit diaphragme (55) d'étranglement de compensation au fur et à mesure de l'accroissement de température du fluide pressurisé parcourant ledit diaphragme (55) d'étranglement de compensation.

6. Unité de commande selon la revendication 5,
caractérisée par le fait
que l'unité (56, 57) de compensation de température comporte un élément thermovariable (56) et un élément de fermeture (57) qui est relié à ce dernier et qui, au fur et à mesure de l'accroissement de température dudit élément thermovariable (56), rétrécit la section transversale d'ouverture du diaphragme (55) d'étranglement de compensation.

7. Dispositif de commande selon la revendication 6,
caractérisé par le fait
que l'élément de fermeture comprend un élément (57) du type cheville, dont la pointe conique (58) pénètre dans l'ouverture du diaphragme (55) d'étranglement de compensation au fur et à mesure de l'accroissement de température de l'élément thermovariable (56).

8. Dispositif de commande selon la revendication 6 ou 7,
caractérisé par le fait
que l'élément thermovariable (56) comprend un corps expansible en un matériau doué d'un coefficient de dilatation thermique élevé.

9. Dispositif de commande selon la revendication 8,
caractérisé par le fait
que le corps expansible consiste au moins partiellement en un élastomère, en particulier du Viton.

10. Dispositif de commande selon l'une des revendications 1 à 9,
caractérisé par le fait
que la force de rappel, agissant sur le corps obturateur (7), est développée par un ressort (8) pouvant être précontraint.

11. Dispositif de commande selon la revendication 10,
caractérisé par le fait
que la précontrainte du ressort (8) est réglable.

12. Dispositif de commande selon l'une des revendications 1 à 11,
caractérisé par le fait
que le corps obturateur (7) présente, à proximité du diaphragme (9) d'étranglement de commande, une arête de commande (20) dégageant la section transversale d'ouverture de la seconde sortie (4) en fonction du déplacement dudit corps obturateur (7).
